# EUROPEAN PATENT APPLICATION

(11) **EP 1 702 896 A1**
(43) Date of publication of application: **20.09.2006**
(21) Application number: 04805103.1
(22) Date of filing: 17.12.2004
(51) Int. Cl.: C03C 8/02, C04B 41/86

(54) **MODIFIED CERAMIC FORMULATIONS, METHOD OF PRODUCING CERAMIC PARTS WITH METALLIC EFFECTS AND CERAMIC PARTS THUS PRODUCED**

(30) Priority: 23.12.2003 ES 200303039
(71) Applicant: Vidres S.A. - Vidresa, 12540 Villarreal (ES)
(72) Inventor: MONTINS NEBOT, Victor, Villarreal 12540 (Castellon) (ES); CABRERA IBANEZ, Maria José, E-12540 Villarreal (Castellon) (ES)
(74) Representative: Soler Lerma, Santiago
(86) International application number: PCT/ES2004/000560
(87) International publication number: WO 2005/061402

(57) **Abstract**

The aforementioned modified ceramic formulations are conventional and made from a ceramic mold with an oxide mixture base in different proportions that have been modified by adding metals, metal mixtures and non-oxidizing metal alloys with fusion points of greater than 1100° C and granulometry of less than 100 microns.

This procedure consists of the application of the aforementioned formulations upon the ceramic part to be decorated, followed by the firing and subsequent grinding.

Its use is for the ceramics industry.

## Description

### OBJECT OF THE INVENTION

This invention is for the ceramic industry, and more specifically for the sector that produces ceramic parts with metallic effects.

More particularly, this invention provides modified ceramic formulations that are especially useful in the manufacture of certain ceramic parts with a metallic appearance, for example ceramic tiles or roofing tiles.

### STATUS OF PREVIOUS TECHNOLOGY

In the ceramic industry, and especially in the sector that produces parts for construction (e.g. ceramic tiles and roofing tiles), a great demand for metallic effects is being reached, whether it is for decorative effects, or metallic finishing over the entire piece.

There have been precedents for producing this type of metallic effect for ceramic tiles using preparations of precious metals with varied structures and compositions. In general, all of these classic methods are deficient in that they pose technical, economic and environmental problems.

Although many attempts have been made to provide these ceramic (and other types) of surfaces with metallic effects, among which is patent ES2130977 relating to SnCl₄ compounds, special mention might here be made of patent ES2161193 by the same party applying for the current patent regarding a formulation and procedure for producing metallic effects in ceramic tiles.
Currently, the applying party, continuing in his line of research, has discovered the way of modifying traditional ceramic formulation in order to obtain ceramic parts with extraordinary metallic effects which has allowed him to successfully complete the current invention; this is described in detail in the following sections of this design brief.

### DESCRIPTION OF THE INVENTION

This invention, as expressed in the statement of its object, deals with modified ceramic formulations and a procedure for manufacturing ceramic parts with metallic effects and ceramic parts produced.

This invention uses modified conventional ceramic formulations by adding metals, metal mixtures and non-oxidizing metal alloys with fusion points of greater than 1100° C and a granulometry of less than 100 microns.
These conventional ceramic formulations are ceramic molds mainly composed of SiO₂ (50-70% p/p) and Al₂O₃ (15-25% p/p), whereas the rest are composed of iron oxides, calcium, sodium, potassium, titanium, barium, magnesium, zinc, and others, in varying proportions.

Additionally, when dealing with colored formulations, these may include colorant oxides, soluble salts or pigments that are commonly used in the ceramics industry.
These metals are added in proportions of between 5% and 85% of the total final modified formulation weight, depending on the desired aesthetic effect.
In principle, it is possible to use any metal, metal mixture or non-oxidizing metal alloy that meets the characteristics described above: a fusion point greater than 1100° C and a granulometry less than 100 microns. Nevertheless, iron-based Cr-Ni alloys have been shown to be especially suitable for achieving the object of this invention.

The modified ceramic formulation of this invention is produced by adding the metal, metal mixture or metal alloy described above and homogenizing the mixture using the most appropriate technique, whether it is using a homogenizer with suitable products (e.g. with polyglycol), or a bonding agent (e.g. amisolo B), using a mill for producing a crushed formulation, etc.
Finally, the modified ceramic formulations of the invention may adopt any of the conventional forms used in the ceramics industry, as per the mixing technique used. Examples of these are pellets, enamels, micronized products, atomized products, serigraphy, and the like.
The modified ceramic formulations of this invention are especially useful in processes for producing ceramics with metallic effects, whether in part or in full.

As mentioned above, another object of this invention is to create a procedure for producing ceramic parts that are furnished with a metallic shine, reflection and appearance, which the modified ceramic formulations of this invention use.
More specifically, the formulations and procedures of this invention are especially suitable for ceramic parts used in construction; pieces such as ceramic floor tiling, ceramic paneling and roofing tiles.

Essentially, the procedure for producing the ceramic parts furnished with metallic effects in accordance with this intention, is carrying out the modified formulation upon the ceramic part to be decorated, the firing of the entire part, and the formulation used for it in a conventional industrial furnace and the subsequent treatment of the tile or roofing tile using surface grinding methods such as sanding, polishing, brushing, and the like, in order to obtain the desired metallic effect.

The application of these modified formulations upon the aforementioned ceramic parts may be carried out by any conventional method used in the ceramics industry. For example, by using wet methods (e.g. bell enamels, discs, pistols or serigraphic dyes), or dry methods (e.g. particle or granule forms).

Once the modified formulation of the invention has been applied upon the ceramic part, the firing process in an industrial furnace commences using a conventional ceramics industry firing cycle at a temperature between 900 and 1300° C for between 30 minutes and 3 hours.

Once the part has been fired and cooled, it is submitted to a surface grinding procedure in order to eliminate surface oxidation residue that may have been produced during the firing process. Depending on the desired end aesthetics, diverse grinding treatments may be used, including polishing, lapping, sanding, liquid abrasive treatments, and the like.

The final ceramic parts thus obtained will have metal-like characteristics, including shine, reflection, texture and appearance.
A mentioned above, this invention is especially appropriate for producing pieces such as ceramic floor tiling, ceramic paneling and roofing tiles.
As may be deduced from the above, the modified formulations of this invention, the procedure for producing the ceramic parts using this formulation and the ceramic parts themselves thus produced, provide many advantages and innovations in the ceramics industry, and particularly in the ceramic construction sector. Particularly relevant are the following:
- Aesthetic advantages, with limitless decorative possibilities for ceramic tiles, among which is producing a metal appearance in a certain area or the entire area of the piece. This, together with the coloring of the formulations allows us to produce a wide range of decorations that have been novel until now in the ceramic construction sector.
- Product line adaptability presented to the majority of the current manufacture technologies for ceramic tiles and roofing tiles, without necessity for using special machines to achieve the desired effects.
- Great stability and versatility of the pieces produced.
- The possibility of producing a wide range of products which are adaptable to the different decoration techniques currently used in the production of ceramic flooring and coating, such as enamel (in its different forms, bell, disc, pistol, candle, etc.) serigraph, dry applications, and the like.
- Economic advantages of simulating metal sheets or plates.
- Additional advantages of transportation, positioning, repositioning, insulation capacity, etc. in comparison to metal sheets or plates, as this is a ceramic product.
- The advantage of using these materials for a wide range of applications; given that the developed product line has metal and enamel properties, these materials can improve the characteristics of the metals used in certain applications, for example in effects exposed to harsh weather conditions. Additionally, due to the properties of these materials, there exist many more ways that these can be used.

### PREFERRED MANUFACTURE OF THE INVENTION

This invention is further illustrated using the following examples, which should in no way be construed to be the extent of its uses, which are expressly stated in the attached list of claims.

### EXAMPLE 1

A ceramic mold with an enamel form was prepared mixing 40g of water with the following oxides in the indicated proportions (percentage of weight with respect to the total mixture of oxides):
SiO₂ ----- 69.3%
Al₂O₃ ----- 22.2%
Fe₂O₃ ----- 0.3%
CaO ----- 0.5%
Na₂O ----- 2.9%
K₂O ------------------------ 4.1%
TiO₂ ----- 0.3%

The aqueous suspension obtained was homogenized by crushing. Subsequently, a 30% iron-based Cr-Ni alloy was added with a granulometry of less than 65 microns.
The mixture produced, through the bell application technique, was applied to a porcelain ceramic stoneware tile of 33 x 33 cm², where an amount of 100g of solid material remained upon it.
The tile was left to dry and was then subjected to a firing cycle in an industrial furnace for 1200° C for 60 minutes.
Once the tile was cool, it was subjected to a polishing treatment used in the ceramics industry with a combination of polishing brushes and diamond grinders.
This procedure produced a shiny, reflecting tile with a metallic texture and appearance; the tile possessed these characteristics over its entire surface.

### EXAMPLE 2

A ceramic mold was prepared with the following oxides in the indicated proportions (percentage of weight with respect to the total mixture of oxides):
SiO₂ ----------------------- 69.5%
Al₂O₃ ---------------------- 21.8%
Fe₂O₃ ---------------------- 0.1%
CaO ----------------------- 0.8%
Na₂O ----------------------- 3.0%
K₂O ------------------------ 3.9%
B₂O₃ ----------------------- 0.5%

50g of an iron-based Cr-Ni alloy with a granulometry less than 45 microns and 20 grams of serigraph product (polyglycol) was added to 50g of the ceramic mold described above.
The resulting mixture was applied to a porcelain ceramic stoneware tile of 33 x 33 cm² using the serigraph technique with the help of a flat 21-thread serigraph screen.
The serigraph tile was allowed to dry and was then submitted to an industrial furnace firing cycle of 1190° C for 70 minutes.
After cooling, the tile was then submitted to a surface grinding treatment.
This procedure produced a shiny, reflective design with a metallic texture and appearance using the serigraph screen.

### EXAMPLE 3

A ceramic mold was prepared with the following oxides in the indicated proportions (percentage of weight with respect to the total mixture of oxides):
SiO₂ ----------------------- 54.1%
Al₂O₃ ---------------------- 18.9%
Fe₂O₃ ---------------------- 0.3%
CaO ----------------------- 8.9%
MgO ----------------------- 4.5%
ZnO ------------------------ 6.5%
Na₂O ----------------------- 4.7%
K₂O ----- 1.8%

50g of an iron-based Cr-Ni alloy with a granulometry of less than 150 microns and 20 grams of an organic bonding agent (amisolo B) was added to 50g of the ceramic mold described above.
The mixture was homogenized and the granules produced were dried at 115° C.
A granulometric selection was then performed through a set of sieves, taking the fractional part of between 100 and 320 microns.

With the help of a 36-thread serigraph screen, a layer of bonding agent for setting this grain using a grainer was used, thus depositing 100 grams of grain on a tile measuring 33 x 33 m².

The tile was then fired in an industrial furnace at 1210° C for 50 minutes.
Once the tile was cooled, it was subjected to a brushing treatment using silicon carbide brushes.
Using this procedure, a tile was produced that had metallic-looking areas.

## Claims

1. Modified ceramic formulations that essentially include conventional ceramic formulations made of a ceramic mold with a base of oxide mixtures in varying proportions; these are identified by the addition of metals, metal mixtures and non-oxidizing metal alloys with fusion points of greater than 1100° C and a granulometry less than 100 microns.

2. Modified ceramic formulations, as per Claim 1, identified by the aforementioned ceramic molds that are made of 50-70% (p/p) SiO₂ and 15-25% (p/p) Al₂O₃ where the rest is composed of iron oxides, calcium, sodium, potassium, titanium, barium, magnesium and zinc in different proportions.

3. Modified ceramic formulations, as per Claim 2, identified by the aforementioned ceramic molds optionally including colorant oxides, soluble salts or pigments.

4. Modified ceramic formulations, as per Claim 1, identified by including said metals in percentages of between 5% and 85% of the total weight of the final modified formulation.

5. Procedure for the manufacture of ceramic parts with metallic effects, identified by the application of any of the modified ceramic formulation of Claims 1 and 4, upon the ceramic part to be decorated, followed by the firing of the piece in an industrial furnace and subsequent grinding treatment of the ceramic part produced.

6. Procedure as per Claim 5, identified by said ceramic piece is used for the construction selected between a ceramic tile for ceramic floor tiling, ceramic paneling and roofing tiles.

7. Procedure as per Claim 5, identified by the application of the aforementioned modified ceramic formulation upon the ceramic piece through dry or wet methods.

8. Procedure as per Claim 5, identified by the aforementioned firing process of between 900 and 1300° C for firing times of between 30 minutes and 3 hours.

9. Ceramic pieces with a metallic effect, identified by producing them using any of the procedures described in Claims 5 through 8.

10. Ceramic parts as per Claim 9, identified by their production and being selected from among ceramic tiles for paneling and floor tiling with metallic effects.

11. Ceramic parts as per Claim 10, identified by the aforementioned metallic effects having shiny, reflective, texture and metallic appearance characteristics.

12. Use of modified ceramic formulations described in Claims 1 and 4 for the manufacture of ceramic parts with metallic effects.

13. Use as per Claim 12, identified by the aforementioned ceramic parts being used for construction selected from among ceramic tiles with metallic effects for flooring, paneling or roofing.

14. Use as per Claim 13, identified by the aforementioned metallic effects having shiny, reflective, texture and metallic appearance characteristics.
